# EUROPEAN PATENT SPECIFICATION

(11) **EP 3 760 589 B1**
(45) Date of publication and mention of the grant of the patent: **15.10.2025**
(21) Application number: 20183470.2
(22) Date of filing: 01.07.2020
(51) Int. Cl.: B09B 3/70, C02F 1/72, C02F 1/74, C02F 1/78, B09B 3/00, B09B 5/00, C02F 1/44, C08H 8/00, C05F 9/00, C02F 1/66, C02F 9/00, C05F 17/40, C05F 17/50, C02F 11/04, B09B 101/70

(54) **PROCESS FOR THE VALORIZATION OF BIOWASTE**
VERFAHREN ZUR VERWERTUNG VON BIOABFÄLLEN
PROCÉDÉ DE VALORISATION DES DÉCHETS BIOLOGIQUES

(30) Priority: 02.07.2019 IT 201900010674
(43) Date of publication of application: 06.01.2021
(73) Proprietor: Hysytech S.r.l., 10043 Orbassano (TO) (IT)
(72) Inventor: MONTONERI, Enzo, 37126 Verona (IT); ANTONINI, Massimiliano, 10060 Cantalupa (IT); SOLARO, Simone, 14055 Costigliole d'Asti (IT)
(74) Representative: Palladino, Saverio Massimo

(56) References cited:
- WO-A1-2013/093951
- WO-A1-2014/091512
- MONTONERI E ET AL: "Acid soluble bio-organic substances isolated from urban bio-waste. Chemical composition and properties of products", WASTE MANAGEMENT, ELSEVIER, NEW YORK, NY, US, vol. 31, no. 1, 1 January 2011 (2011-01-01), pages 10 - 17, XP027476376, ISSN: 0956-053X, [retrieved on 20101104], DOI: 10.1016/J.WASMAN.2010.08.029

## Description

### FIELD OF THE INVENTION

The present invention relates to a process for recycling biowaste and obtaining products that may be used in further productions.

### STATE OF THE ART

The footprint on the environment is an ever-growing concern for the sustainability of human activities in general. The problems to be taken into account in planning or attending to human activities are twofold. On the one side, the planet is a closed system and the resources (of any kind) are finite, so it is not possible to plan a development based on a continuous exploitation of fresh resources. On the other side, said activities generate wastes, both as by-products of production processes and as products (or their parts) disposed of at the end of their useful life cycle, which, if not properly and carefully managed, contribute to an extensive pollution of the environment.

One important category of wastes to be managed is represented by the biowastes, namely, all the refuses coming from activities in which materials of vegetal or animal origins are used or treated. Examples of these wastes are the scraps of agriculture and forestry, of wood processing, of the paper and pulp industry, animal dejections, of the food and meat industry, and urban biowastes.

In the last decades attempts have been made to recover these biowastes.

One possibility of use of biowastes is their incineration to produce thermal and electrical power; other intensively studied approaches are their reuse in chemical reactions to obtain biodiesel, and fermentation to yield biogas and bioethanol.

All these recycle routes would have the advantage of avoiding the consumption of non-renewable resources, such as fossil fuels. The technologies needed for these recycles are however expensive, costing more than the market value of the obtained energy or fuel. This is due to a number of unfavorable features which are typical of biowastes, e.g., high water content, distribution over wide areas (making the concentration of biowastes in treatment plants economically unattractive), low conversion of organic carbon to the desired product, and no exploitation of the residual unconverted organic fraction.

Another possibility of reuse of biowastes, explored in more recent years, is their recycle for the production of raw products that may be employed in further productions in the chemicals industry.

Chapter 6 of the book Food Waste Reduction and Valorisation, edited by P. Morone et al., 2017, Springer Intnl. Publ., is a review, entitled "Municipal waste treatment, technological scale up and commercial exploitation: the case of bio-waste lignin to soluble lignin-like polymers" (author E. Montoneri), is a review covering the subject of the valorization of biowastes from urban and agriculture source as feedstock for the production of biobased value added products. It reports that:
1) the alkaline chemical hydrolysis of anaerobically and aerobically fermented biowastes yields water soluble biopolymers (SBPs);
2) SBPs have multiple properties for use as surfactants in the formulation of detergents, textile dyeing baths, flocculants, dispersants and binding agents for ceramics manufacture, emulsifiers, auxiliaries for soil/water remediation, nanostructured materials for chemical and biochemical catalysis, plastic materials, soil fertilizers and plant biostimulants for agriculture, and animal feed supplements;
3) ozonization improves the surfactant properties and quality of SBPs obtained from composted municipal biowaste, lowering the surface tension of aqueous solutions (e.g., 13-18% at 2 g/L) of pristine SBPs. Ozonization also leads to other improvements in the product, namely, a white color (more acceptable for many applications, e.g. textile detergents and dyeing) for the ozonized SBPs vs. black for the pristine SBPs, and the production of a mix of molecules with molecular weight ≤ 5 kDa, such as aliphatic carboxylic acids, aromatics, amino acids for use in the chemical industry in place of the counterparts obtain from petrochemical raw materials;
4) hydrogenation of SBPs obtained from the municipal biowaste anaerobic digestate and compost yields surfactants with slightly or not improved surface tension and no bleaching compared to pristine SBPs; both pristine and hydrogenated SBPs have molecular weight above 100 kDa; the hydrogenated SBPs from compost do not exhibit any improvement of surfactant properties, compared to the pristine SBPs; the hydrogenated SBPs from anaerobic digestate lower the surface tension of water compared to the corresponding pristine SBPs. Hydrogenation converts aromatic C moieties of pristine SBPs to cycloaliphatic C moieties. This makes the hydrogenated SBPs more suitable for the development of improved biopolymers for the manufacture of eco-compatible or biodegradable plastics.

Though interesting from an academic point of view, and promising in some cases, these results are still not sufficient for an actual, industrial scale recycle of biowastes.

Patent application WO 2013/093951 A1 describes a mixture comprising an organic fraction and a mineral fraction, the organic fraction comprising polymer molecules having a molecular weight included between 5 and 500 kDalton and a polydispersion index included between 6 and 53, as well as a process for its production.

Patent application WO 2014/091512 A1 describes the production, composition and properties of plastic materials containing a first component A derived from fossil sources, and a second component B that is a mix of water soluble biopolymers obtained from residual biomass of urban, agriculture, agricultural-industrial and animal source.

It is thus an object of the present invention to provide an improved process for the recycle of biowastes, giving rise to products that find application in several field of the chemical industry.

### SUMMARY OF THE INVENTION

This object is achieved with the present invention, which relates to a process for the recycling of biowastes, as defined in the claims.

### DETAILED DESCRIPTION OF THE INVENTION

The processes herein described can be applied, in principle, to any kind of biomass, also deriving from dedicated agriculture. However, biowaste represents the preferred feedstock, as its use allows sparing plants for food production purposes and impacts positively the waste management and industrial chemicals' sectors. Particularly preferred biowastes for use in the invention are municipal biowastes, characterized by a negative cost, since collection costs are already covered by citizens' taxes. The invention is thus primarily meant for the valorization of residual biomass produced by human activities, and in the description that follows and in the claims reference is made to biowaste(s) as starting material(s) of the process, especially municipal biowastes; it remains understood anyway that the process can be applied also to other biomasses, not constituting wastes of other productions or activities.

The invention stems from the following observations. Biowastes contain, as proximates, polysaccharides, proteins, fats and lignin. Fermentation converts these proximates to biogas, CO₂ and water. The pristine recalcitrant lignin matter remains as lignin-like matter in the solid residue. Thus, the successive chemical reactions, carried out starting from the solid recalcitrant solid residue, can exploit/valorize only the residual lignin matter. By comparison, the one-stage chemical process by room temperature oxidation, carried out starting from the as collected not fermented biowaste, allows exploiting and valorizing all pristine organic matter distributed over all pristine biowaste. Thus, compared to the known fermentation/two-stage hydrolysis/ozonization process, the present one-stage room temperature oxidation process offers the following advantages: (i) lower energy consumption; and (ii) yield of products with more diversified chemical nature, processability, properties and performance. Among the products obtained with the process of the invention, of particular importance are new biosurfactants with exceptional properties for multiple uses and oximes with molecular weight ≤ 200 Da or derivatives thereof, which are important intermediates in organic synthesis, for example for the synthesis of polymers by ring opening polymerization or for used as fungicides, and which have no commercial counterparts.

The first stage of the process of the invention is the oxidation of the biowaste or biowaste-derived feedstock.

The oxidation operation, a.1, is carried out directly on the biowaste as collected.

a.1.1. Oxidation via in-situ formation of photosensitizer. The first form of operation a.1 is distinguished for the in-situ formation of the photosensitizer before adding the oxidizing reagents. In this case, the biowaste is suspended or, for the water-soluble part, solubilized in water; the weight ratio of water to biowaste dry matter may vary from 10 to 30. The biowaste-water mix is stirred for a time between 0.5 and 1 h to be homogenized. Then, KOH is added to reach pH 10 and stirring is continued for 1 h. During this time a soluble biopolymer is formed in 0.1-0.2 w/w concentration.

The product thus obtained has molecular weight above 50 kDa and 6-53 polydispersivity index. It is characterized by the presence of aliphatic carbon chains, aromatic carbon, and polar functional groups, free and/or bonded to mineral elements, to yield the following % weight relative chemical composition: 37 ≤ C ≤ 65; 3 ≤ N ≤ 7; ash ≤ 30; Si ≤ 3.0; Fe ≤ 0.9; Mg ≤ 1.2. In the above composition, N e C mean organic nitrogen and carbon distributed over the following carbon types and functional groups with following composition expressed as mole fraction of the specific carbon type over the product total organic C: 0.3 ≤ Cₐₗ ≤ 0.6; CN ≤ 0.1; OMe ≤ 0.1; 0.3 ≤ OR ≤ 0.6; 0.02 ≤ OCO ≤ 0.08; 0.07 ≤ Ph ≤0.30; 0.02 ≤ PhOH ≤ 0.06; PhOR/Ar ≤ 0.09; 0.04 ≤ COOH ≤ 0.12; CON ≤ 0.12; C=O ≤ 0.05; where Cₐₗ = aliphatic C bonded to H and/or to other aliphatic C and/or to aromatic C, CN = C bonded to amino functional groups, OMe = methoxy C, OR = alcoxy C, OCO = anomeric C, Ph = aromatic C bonded to H and/or to other aromatic C and/or to other aliphatic C, PhOH = penolic C, PhOR/Ar = phenoxy C, COOH = carboxylic C, CON = amide C, C=O = keto C. The product has the property of being a photosensitizer, that is, it is capable to transfer solar light energy to water, splitting the water molecule into OH and O radicals, which are the active oxidizing species of the organic matter. This action occurs thanks to the presence of Fe ions. These are bonded to the carboxylic groups of the organic matter and kept in solution by the alkaline pH. Under these conditions, they activate a photo Fenton like-process, which is responsible of the photosensitizing properties of the above biopolymers.

After allowing for the formation of the photosensitizer, the mixture is irradiated with natural solar light. The irradiation time may vary from 2 to 48 h. The irradiation time is otpimized depending of the nature of the biowaste and on the type of product and yield that is desired to achieve.

The process may be carried out in reaction vessels designed to achieve the highest possible surface/depth ratio of the irradiated mixture. An example is a reactor consisting of parallel glass (e.g., borosilicate) tubes with high aspect ratio through wich the slurry is circulated, for instance 75 cm length and 3 cm internal diameter, equipped with two aluminium parabolic mirrors to concentrate the solar radiation along the tube axis; with this exemplary construction, the reactor has 0.26 m² total surface containing 5 L total of sample. A radiometer (Acadus 85) measures the incident light in the 300-400 nm wavelength range peaking at 370 nm and accounting for ca. 7% of the total solar energy.

a.1.2. Oxidation via ex-situ formation of photosensitizer. The photosintesizer is produced in a separate reactor, using the same experimental conditions as in the first form, but the reaction is carried at temperatures up to 150 °C to increase the photosensitizer yield. The mixture is separated from the insoluble residue. The aqueous phase is filtered through a 50 kDa membrane as described further below. The retentate phase is dried to obtain the photosensitizer in solid form. The solid photosensitizer is added to fresh biowaste slurry prepared as in the above first form of the application and then irradiated with solar light as described above. This alternative form allows preparing photosensitizers from other biowaste and use them in the oxidation of the intended biowaste to oxidize at different phtosensitizers concentrations in the reaction slurry. Previous work has demonstrated that the hydrolysis of different biowastes hydrolysis yields different photosensitizer with different performance. In essence, for a given biowaste to oxidize, a photosensitizers prepared from a different type of biowaste may work better than the photosensitizer prepared form the biowaste to be oxidized. Therefore, the present second form of application allows optimizing the type and concentration of the photosensitizer to use in the intended oxidation reaction, according to the type of biowaste to oxidize and to the desired products to be obtained.

Coadivuating oxidizing agents such as O₂, air, H₂O₂, ozone, inorganic peroxides (e.g. Na₂O₂ and similar) may be added to accelerate the process kinetics.

The oxidation reaction produces carboxylic acid functional groups, which lower the slurry pH. The pH is maintained 9-10 by adding alkali (e.g. NaOH and KOH) during the reaction.

The reaction temperature is the ambient temperature where the reactor is operated.

The SBPs thus obtained is diluted with water; the weight ratio of water to SBPs dry matter may vary from 10 to 30.

The water/SBPs mixture is allowed reacting at room temperature for a period varying between 2 and 64 h, after which it is sent to separation stage B.

In both possible ways of carrying out oxidation operation a.1, although the reaction for most types of biowaste is at least 9, there may be biomasses which are not compatible with alkaline pH, because they and/or their reaction products may not be stable. In this case, the reaction may be carried out at acid pH. Thus, to encompass all possible cases, the reaction pH may range from 1 to 13. In both possible ways of carrying out oxidation operation a.1, the reaction may be carried out in the presence or absence of solar light irradiation. Solar light irradiation in combination with the use of catalysts and oxidizing reagents is an option of the present invention, which can be possibly used to accelerate the reaction kinetics to enhance the reaction yield and selectivity for the production of desired compounds.

In the present invention, exploitation of solar light for this purpose is possible thanks to the *in-situ* formation in (or addition to) the biowaste slurry of a biophotosensitizer (PHTS) obtained by hydrolysis of composted municipal biowaste. The PHTS is a water soluble mix of macromolecules containing long aliphatic carbon chains bonded to aromatic moieties substituted by a variety of acid and basic functional groups bonded to mineral elements. Its chemical composition has already been described in Chapter 6 of the book Food Waste Reduction and Valorisation, cited above. At a concentration in water of a few mg/L, PHTS it is capable to transfer solar light energy to water molecules and activate water oxygen as oxidant under solar light irradiation. This property is believed to be due to a photo-Fenton process ascribed to the presence of Fe ions. These, bonded to the functional groups of the PHTS organic matter, are soluble in water in the entire pH range and can therefore catalyze the innovative one-step process. The PHTS has already been used to catalyze the mineralization of organic pollutants in water under solar light irradiation. In the present invention, the PHTS is used to catalyze the oxidation of biowastes under controlled conditions, deriving from a combination of experimental parameters such as the water/biowaste ratio, the oxidizing agent, the reagents contact time, the PHTS concentration, the temperature and the reaction medium pH, in order to avoid the mineralization of the biowaste organic matter and maximize the yield of the value added products described in the above examples. For example, varying the reaction from 4 to 64 h and keeping the matter to be oxidized/photosensitizer ratio above 50 will allow changing the distribution and yields of useful products, such as biopolymers, biosurfactants, building blocks monomers, without significantly mineralizing the pristine organic matter to CO₂ and H₂O.

The result of the oxidation of operation a.1 is a mixture of molecules with molecular weight (MW) ranging from MW > 0.2 kDa to > 750 kDa and a mix of organic oximes with average C/N ratio 7.

The water/products mixture obtained at the end of the oxidation reaction of step a.1 is then sent to the separation stage. Soluble from insoluble products are separated by sedimentation or horizontal decanter centrifuge. Soluble products are filtered through ultrafiltration membranes with molecular cut off varying from 0.2 kDa to over 750 kDa.

To achieve an efficient separation of the mix of products, into essentially homogeneous classes of compounds, the membrane separation system consists of a series of membrane separation tanks in series, each containing a membrane with smaller porosity compared to the previous membrane in the flow direction of the solutions/suspensions. This way, the separation occurs in a cascade process, in which the product of one separation stage is the feedstock of the next separation stage.

Separation of mixture of products in solutions/suspensions by means of membranes is a process *per* se known; membranes with selected/desired porosity are commercially available from many sources, which are characterized by an average pore size corresponding, with some approximation, to ranges of molecular weight of compounds that cannot pass through the membrane (that is, are retained by the membrane), and ranges of molecular weight of compounds that can pass through the membrane. In the field, the portion of the initial feedstock that passes the membrane is called "permeate", while the part that does not pass the membrane is called "retentate". Membrane separation can be carried out in essentially batch mode, charging the feedstock in the retentate chamber of the separation tank, exerting a pressure in the retentate chamber to force molecules to pass through the membrane, and extracting the permeate from the corresponding chamber of the tank. It is also possible to operate in a mode in which the feedstock is fed to the retentate chamber of the tank, than a solvent (in the present invention, water) is continuously fed to the same retentate chamber, and the permeate is continuously extracted from the permeate chamber.

In all cases, given the ranges of molecular weight of compounds to be separated, the person skilled in the art knows how to select the proper membrane suitable for the specific requests of the process to be carried out, at most with a few trials of different available membranes.

The products obtainable from the processes of the invention are similar to those obtainable by the hydrolysis of biowaste at 60-150 °C and pH 13 described in Chapter 6 of the book Food Waste Reduction and Valorisation, cited above, with the advantage that the processes of the invention take place also at room temperature. These products consist in a mixture of molecules with molecular weight from 5 to over 750 kDa characterized by the presence of aliphatic carbon chains, aromatic carbon, and polar functional groups, free and/or bonded to mineral elements, with the following weight % chemical composition: 37 ≤ C ≤ 65; 3 ≤ N ≤ 7; ashes ≤ 30; Si ≤ 3.0; Fe ≤ 0.9; Al ≤ 0.8; Mg ≤ 1.2; Ca ≤ 6.5; K ≤ 10; Na ≤ 10; Cu ≤ 0.03; Ni ≤ 0.01; Zn ≤ 0.05; Cr ≤ 0.003; Pb ≤ 0.01. In this composition, N e C mean organic nitrogen and carbon distributed over various carbon types and functional groups, with the following composition expressed as mole fraction of the specific carbon type over the product total organic C: 0.3 ≤ Cₐₗ ≤ 0.6; CN ≤ 0.1; OMe ≤ 0.1; 0.3 ≤ OR ≤ 0.6; 0.02 ≤ OCO ≤ 0.08; 0.07 ≤ Ph ≤0.30; 0.02 ≤ PhOH ≤ 0.06; PhOR/Ar ≤ 0.09; 0.04 ≤ COOH ≤ 0.12; CON ≤ 0.12; C=O ≤ 0.05, wherein: Cₐₗ = aliphatic C bonded to H and/or to another aliphatic C and/or to aromatic C; CN = C bonded to amino functional groups; OMe = methoxy C; OR = alcoxy C; OCO = anomeric C; Ph = aromatic C bonded to H and/or to another aromatic C and/or to another aliphatic C; PhOH = penol C; PhOR/Ar = phenoxy; COOH = carboxylic C; CON = amide C; C=O = carbonylic C. However, compared to the products obtainable by hydrolysis, the present invention allows increasing the content of alipahtic carbon and of COOH functional groups, decreasing the content of aromatic carbon, and modulating the product hydrophilic/lipophilic balance in order to obtain surfactants with improved capability to lower water surface tension and biopolymers with better processability and higher biodegradability than the biopolymers obtained by hydrolysis. In adittion to this, the process invention allows obtaining also valuable new small molecule compounds such as oximes with high potential as fungicides.

The specific blends of compounds obtained with the process of the invention, and their characteristics, depend from the initial feedstock. An example of the effects of the feedstock nature on the nature of the product obtained by oxidation is given in the tables below.

| Fraction content in oxidized product, % w/w | | |
|---|---|---|
| Fraction Molecular weight (MW, kDa) distribution | Feedstock | |
| | Compost SBPs | Anaerobic digestate SBPs |
| MW > 30 | 5 | 35 |
| 30 > MW ≥ 20 | / | / |
| 20 > MW ≥ 5 | 8 | / |
| 5 > MW ≥ 0.2 | 7 | 10 |
| MW **<** 0.2 | 80 | 55 |

| Fraction C/N ratio, w/w | | |
|---|---|---|
| Fraction Molecular weight (MW, kDa) distribution | Feedstock | |
| | Compost SBPs | Anaerobic digestate SBPs |
| MW > 30 | 8 | 10 |
| 30 > MW ≥ 20 | / | / |
| 20 > MW ≥ 5 | 6 | 5 |
| 5 > MW ≥ 0.2 | 6 | 5 |
| MW < 0.2 | 12 | 7 |

| Fraction surface tension (y, mM/m) for 2 g/L solution | | |
|---|---|---|
| Fraction Molecular weight (MW, kDa) | Feedstock | |
| | Compost SBPs | Anaerobic digestate SBPs |
| MW ≥ 30 | 48-59 | 37-43 |

| Fraction aliphatic/aromatic (Af/Ar) C ratio | | |
|---|---|---|
| Fraction Molecular weight (MW, kDa) | Feedstock | |
| | Compost SBPs | Anaerobic digestate SBPs |
| MW ≥ 30 | 9.5-12.1 | 6.9-9.7 |

The invention will be further illustrated by the following non limitative examples.

### Methods and Instruments

Chemical analyses referred to in the examples have been carried out by direct infusion in a Varian 310 triple quadrupole mass spectrometer (Agilent, Milan, Italy) equipped with an electrospray ionization ESI source, a 212 LC pump, a ProStar 410 AutoSampler and dedicated software.

Membrane separations have been carried out by sequential vertical flow filtration, using a 400 ml Amicon 8400 Ultrafiltration Cell operating under 3 bars N₂ pressure; filtration was carried through polysulphone membrane with different molecular cut off at 750, 150, 100, 50, 30, 20, 5 and 0.2 kDa.

### EXAMPLE 1

This example is representative of the process of the invention in which the oxidations stage is carried out according to option a.1, namely, direct oxidation of pristine biowaste.

In a reactor equipped with a mechanical stirrer 4% mol/mol ozone/oxygen was bubbled at a flow rate of 2 L/min through a 1.5 L slurry containing 48.54 g of as collected raw municipal kitchen waste, to which 23.5 g KOH was added to maintain pH 10 during the reaction, which lasted 48 h.

At the end of the reaction, the whole flask content was centrifuged at 3000 rpm for 20 min in order to separate the solid material (S) from the liquid phase (L).

The liquid phase was filtered sequentially through membranes with decreasing molecular weight cut off to obtain the retentates (R) at 750, 100, 30, and the final permeate (P) at 20 kDa. The products and the reaction have been analyzed to determine the C and N concentrations, and C and N yields relative to the corresponding concentrations in the feedstock. The results are reported in Table 1.

**Table 1**

| Sample | C and N concentration, % w/w in dry matter | | C and N yields, % w/w | |
|---|---|---|---|---|
| | C | C/N | C | N |
| S | 40.3 | 20.8 | 60.5 | / |
| L | 21.9 | 12.3 | 36.4 | / |
| R750 | 39.0 | 5.9 | 19.2 | / |
| R100 | 33.2 | 7.4 | 1.3 | / |
| R30 | 42.1 | 13.2 | 1.3 | / |
| P20 | 14.2 | 17.4 | 43.0 | / |

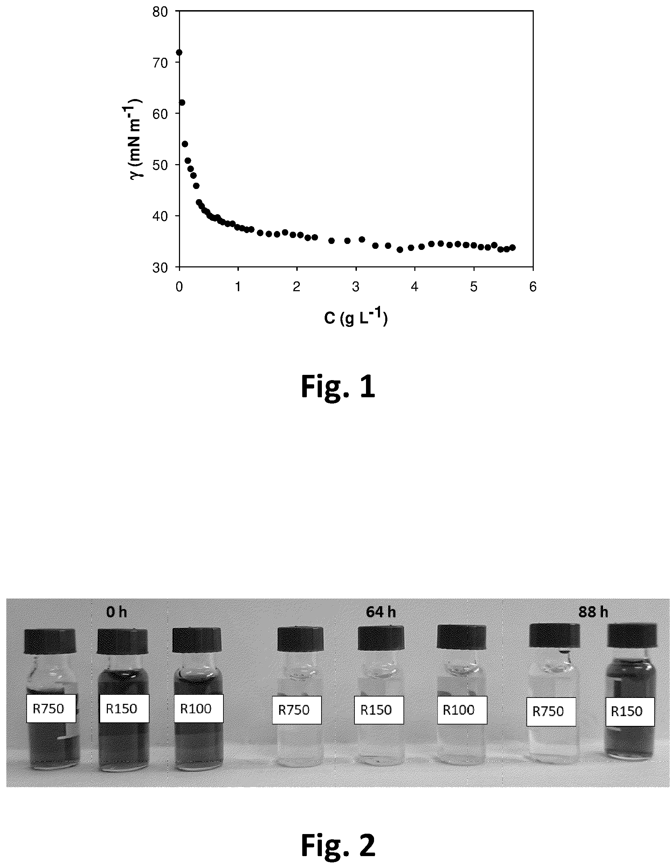

## Claims

1. Process for the recycling of biowastes, comprising:
A) a first process stage consisting in
a.1) a one-step chemical oxidation of the biowaste carried out in water with a weight ratio water:biowaste dry matter between 10 and 30 and with the addition of a base at the beginning and during the reaction to maintain the pH of the reaction mix to at least 9, said oxidation carried out at room temperature, catalysed by solar light, in the presence of a photosensitizer and one or more oxidizing agents selected among air, oxygen, peroxides and ozone;
and
B) a second process stage consisting in the separation through membranes of the mix of products obtained in stage A;
wherein oxidation operation a.1 is carried out:
- via alternative method a.1.1 by in-situ formation of the photosensitizer, before adding the oxidizing agents, suspending or, for a water-soluble part, dissolving in water the biowaste, stirring the biowaste-water mix for a time between 0.5 and 1 h, adding KOH to reach pH 10, continuing the stirring for 1 h, and finally irradiating the mixture with natural solar light for a time between 2 and 48 h; or
- via alternative method a.1.2 by ex-situ formation of the photosensitizer, which is produced in a separate reactor and added to fresh biowaste to be treated.

2. Process according to claim 1, in which oxidation operation a.1 is carried out via alternative method a.1.2 and the photosensitizer is produced suspending or, for the water-soluble part, dissolving in water a biowaste, stirring the biowaste-water mix for a time between 0.5 and 1 h, adding KOH to reach pH 10, continuing the stirring for 1 h, and finally irradiating the mixture with natural solar light for a time between 2 and 48 h, at a temperature up to 150 °C; separating the mixture filtering it through a 50 kDa membrane; and recovering and drying the retentate phase to obtain the photosensitizer in solid form.

## Patentansprüche

1. Verfahren zur Wiederverwertung von Bioabfällen, umfassend:
A) eine erste Verfahrensstufe, bestehend aus
a.1) einer einstufigen chemischen Oxidation von Bioabfällen, die in Wasser mit einem Gewichtsverhältnis von Wasser:Bioabfall-Trockenmasse zwischen 10 und 30 und unter Zugabe einer Base zu Beginn und während der Reaktion durchgeführt wird, um den pH des Reaktionsgemisches auf mindestens 9 zu halten, wobei die Oxidation bei Raumtemperatur, katalysiert durch Sonnenlicht, in Gegenwart eines Photosensibilisators und eines oder mehrerer Oxidationsmittel, ausgewählt aus Luft, Sauerstoff, Peroxiden und Ozon, durchgeführt wird;
und
B) eine zweite Verfahrensstufe, die aus der Trennung des in Stufe A erhaltenen Produktgemisches durch Membranen besteht;
wobei der Oxidationsvorgang a.1:
- nach einem alternativen Verfahren a.1.1 durch die In-situ-Bildung des Photosensibilisators, bevor die Oxidationsmittel zugegeben werden, durch Suspendieren oder, für einen wasserlöslichen Teil, Auflösen der Bioabfälle in Wasser, Rühren des Bioabfall-Wasser-Gemisches für eine Zeit zwischen 0,5 und 1 h, Zugeben von KOH zum Erreichen eines pH von 10, Fortsetzen des Rührens für 1 h und schließlich Bestrahlen des Gemisches mit natürlichem Sonnenlicht für eine Zeit zwischen 2 und 48 h; oder
- nach einem alternativen Verfahren a.1.2 durch die Ex-situ-Bildung des Photosensibilisators, der in einem getrennten Reaktor hergestellt wird und den zu behandelnden frischen Bioabfällen zugegeben wird, durchgeführt wird.

2. Verfahren nach Anspruch 1, wobei der Oxidationsvorgang a.1 nach einem alternativen Verfahren a.1.2 durchgeführt wird und der Photosensibilisator durch Suspendieren oder, für den wasserlöslichen Teil, Auflösen der Bioabfälle in Wasser, Rühren des Bioabfall-Wasser-Gemisches für eine Zeit zwischen 0,5 und 1 h, Zugeben von KOH zum Erreichen eines pH von 10, Fortsetzen des Rührens für 1 h und schließlich Bestrahlen des Gemisches mit natürlichem Sonnenlicht für eine Zeit zwischen 2 und 48 h bei einer Temperatur von bis zu 150 °C; Trennen des Gemisches, indem es durch eine 50-kDa-Membran filtriert wird; und Gewinnen und Trocknen der Retentatphase hergestellt wird, um den Photosensibilisator in fester Form zu erhalten.

## Revendications

1. Procédé de recyclage des biodéchets, comprenant :
A) une première étape de procédé consistant en
a.1) une oxydation chimique en une seule étape des biodéchets effectuée dans de l'eau avec un rapport pondéral eau:matière sèche des biodéchets entre 10 et 30 et avec l'ajout d'une base au début et pendant la réaction pour maintenir le pH du mélange réactionnel à au moins 9, ladite oxydation étant effectuée à température ambiante, catalysée par la lumière solaire, en présence d'un photosensibilisateur et d'un ou plusieurs agents oxydants choisis parmi l'air, l'oxygène, les peroxydes et l'ozone ;
et
B) une deuxième étape de procédé consistant en la séparation à travers des membranes du mélange de produits obtenu à l'étape A ;
dans lequel l'opération d'oxydation a.1 est effectuée :
- via une méthode alternative a.1.1 par formation in situ du photosensibilisateur, avant d'ajouter les agents oxydants, de mettre en suspension ou, pour une partie hydrosoluble, de dissoudre dans l'eau les biodéchets, d'agiter le mélange biodéchets-eau pendant une durée entre 0,5 et 1 h, d'ajouter du KOH pour atteindre un pH de 10, de poursuivre l'agitation pendant 1 h, et enfin d'irradier le mélange avec de la lumière solaire naturelle pendant une durée entre 2 et 48 h ; ou
- via une méthode alternative a.1.2 par formation ex situ du photosensibilisateur, qui est produit dans un réacteur séparé et ajouté aux biodéchets frais à traiter.

2. Procédé selon la revendication 1, dans lequel l'opération d'oxydation a.1 est effectuée via la méthode alternative a.1.2 et le photosensibilisateur est produit en mettant en suspension ou, pour la partie hydrosoluble, en dissolvant dans l'eau des biodéchets, en agitant le mélange biodéchets-eau pendant une durée comprise entre 0,5 et 1 h, en ajoutant du KOH pour atteindre un pH de 10, en continuant l'agitation pendant 1 h, et enfin en irradiant le mélange avec de la lumière solaire naturelle pendant une durée entre 2 et 48 h, à une température allant jusqu'à 150 °C ; en séparant le mélange en le filtrant à travers une membrane de 50 kDa ; et en récupérant et en séchant la phase du rétentat pour obtenir le photosensibilisateur sous forme solide.
